Europäisches Patentamt

European Patent Office

Office européen des brevets

(19)

(11) Numéro de publication: **0 069 182**
**A1**

## (12) DEMANDE DE BREVET EUROPEEN

(21) Numéro de dépôt: 81401066.6

(22) Date de dépôt: 02.07.81

(51) Int. Cl.³: **H 02 H 1/00**
**H 02 H 3/04, H 02 H 5/04**
**H 04 N 3/20**

(43) Date de publication de la demande:
12.01.83 Bulletin 83/2

(84) Etats contractants désignés:
AT BE CH DE FR GB IT LI LU NL SE

(71) Demandeur: Gavarret, Gaston
41 Rue de Méon
F-64000 Pau(FR)

(71) Demandeur: Linier, Michel
14 Rue du Tremblay
F-64000 Pau(FR)

(72) Inventeur: Gavarret, Gaston
41 Rue de Méon
F-64000 Pau(FR)

(72) Inventeur: Linier, Michel
14 Rue du Tremblay
F-64000 Pau(FR)

(74) Mandataire: Ravina, Bernard
44, avenue Léon Blum
F-31500 Toulouse(FR)

(54) Dispositif de sécurité pour appareils électriques et notamment pour postes récepteurs de télévision.

(57) Dispositif de sécurité pour appareils électriques tels que notamment les postes recepteurs de télévision, pour protéger ceux-ci lors d'une défaillance de l'un quelconque des composants du dit appareil en sorte d'éviter la destruction complète de ceux-ci.

Le dit dispositif se caractérise essentiellement en ce qu'il est doté d'au moins un détecteur (2) d'élévation anormale de la température interne du dit appareil et/ou d'au moins un détecteur (3) d'élévation anormale de la luminosité interne au dit appareil et/ou d'au moins un détecteur (4) de particules de carbone à l'intérieur du dit appareil.

Application directe à la protection d'appareils électriques tels que notamment les postes recepteurs de télévision lors d'une défaillance de leurs composants.

Fig.2

EP 0 069 182 A1

# DISPOSITIF DE SECURITE POUR APPAREILS ELECTRIQUES ET NOTAMMENT POUR POSTES RECEPTEURS DE TELEVISION.

La présente invention concerne un dispositif de protection d'appareils électriques dont notamment les recepteurs de télévision ou les appareils de même type tels qu'oscilloscopes, appareils vidéo-jeux etc.. contre notamment un risque éventuel d'implosion de leur tube cathodique.

Il est connu jusqu'à nos jours, différents dispositifs de protection d'appareils électriques contre le surchauffage de ceux-ci. Ces différents dispositifs qui sont utilisés principalement pour la protection des moteurs électriques, sont généralement constitué à partir de relais thermiques ou encore de capteurs thermométriques. On connaît par exemple, des dispositifs de protection thermique de moteurs électriques au moyen de résistances à coefficient de température positif (brevet de la République Fédérale d'Allemagne N° L. 47.376 et N° L 45.094) ou encore au moyen de résistances à coefficient de température négatif (C.T.N.) noyées dans les enroulements des dits moteurs (Brevet Français N° 1.221.005). Cependant, il est à remarquer que si ces différents dispositifs peuvent donner satisfaction, un certain temps malgré la précision relativement médiocre du seuil de température maximale à partir de laquelle on désire couper l'alimentation de l'appareil électrique, il s'avère que ces organes vieillissent relativement vite et ne réagissent plus de la même façon après une période d'utilisation plus ou moins longue dans un milieu ambiant soumis à de nombreuses et importantes variations de température.

En ce qui concerne les appareils recepteurs de télévision ou d'autres appareils électriques dotés notamment d'un tube cathodique, tels que les oscilloscopes par exemple, ou les appareils de jeux vidéo, une protection au moyen de tels dispositifs ne s'avèrerait pas suffisante du fait que leur fiabilité semble utopique et leur précision trop médiocre.

Le but de l'invention est de remédier à cela en réalisant un dispositif de protection d'appareils électriques tels que récepteurs de télévision, oscilloscopes, etc... pour protéger ceux-ci lors d'une éventuelle élévation anormale de la température à l'intérieur du coffret et notamment au niveau du col du tube cathodique et/ou lors d'une éventuelle élévation anormale de la luminosité régnant à l'intérieur du coffret de l'appareil et/ou lors d'un éventuel début d'incendie dû par exemple au claquage de l'un des composants.

A cet effet, le dispositif de protection selon l'invention réalisé pour des appareils électriques et/ ou électroniques tels que récepteurs de télévision, oscilloscopes et autres, comporte au moins un détecteur d'élévation anormale de température pouvant être disposé au voisinage d'une zone interne de l'appareil des plus exposées à ce type de défaillance, c'est-à-dire principalement au niveau du col du tube cathodique et/ ou au niveau du générateur de très haute tension (T.H.T.).

Selon une autre caractéristique du dit dispositif selon l'invention, celui-ci est doté d'un détecteur d'élévation anormale de la luminosité interne régnant dans le coffret du dit appareil en sorte de déceler d'éventuels court-circuits, et/ ou d'éventuels défauts de fonctionnement dûs à des arcs électriques ou à déceler un éventuel incendie naissant.

Selon une autre caractéristique du dispositif selon l'invention, celui-ci comporte un détecteur de particules de carbone de manière susceptible à déceler une éventuelle production de fumée dûe par exemple au claquage éventuel ou à un incendie naissant de l'un de ses composants à base de carbone tels que par exemple, une résistance, un bobinage, etc...

Selon une autre caractéristique de l'invention, le dit dispositif signale au téléspectateur au moyen d'un avertisseur sonore et/ ou lumineux, qu'une défaillance interne à l'appareil a été détectée, pouvant nécessiter l'intervention d'un spécialiste du dépannage afin d'éviter la destruction totale du dit appareil.

Selon encore une autre caractéristique du dispositif selon l'invention, celui-ci coupe automatiquement l'alimentation électrique du dit appareil dès qu'une défaillance interne à celui-ci est détectée, et simultanément actionne le dispositif avertisseur sonore et/ ou visuel qu'il maintient en activité malgré la coupure effectuée sur le circuit d'alimentation de l'appareil, en sorte d'informer le téléspectateur que l'arrêt du fonctionnement du dit appareil est dû à la défaillance de l'un des composants de ce dernier, et non à une coupure extérieure sur le secteur d'alimentation.

Selon une autre caractéristique de l'invention, le détecteur 2 d'élévation anormale de température est un capteur de température à I L S (Interrupteur à Lame souple), essentiellement basé sur la propriété qu'ont certaines matières comme la ferrite par exemple qui ont leur réluctance magnétique qui varie rapidement sur une petite variation de température.

D'autres avantages et caractéristiques de l'invention apparaîtront à la lecture de la description ci-après de différentes formes de réalisation données à titre d'exemples non limitatifs, avec référence aux dessins annexés en lesquels :

La figure 1 est une première forme de réalisation d'un dispositif conforme à l'invention, représenté en état de surveillance.
Les figures 2 et 3 représentent d'autres formes de réalisation du dispositif selon l'invention.
La figure 4 est une variante de réalisation du dispositif représenté en figure 3.
Tel que représenté, le dispositif de sécurité pour appareils électriques du type récepteurs de télévision, oscilloscopes, etc... se compose essentiellement d'une source électrique 1 préférentiellement indépendante de l'alimentation interne du dit appareil, d'au moins un organe détecteur 2 d'élévation anormale de température et/ ou d'au moins un organe détecteur 3 d'élévation anormale de luminosité à l'intérieur du coffret de l'appareil, et/ ou d'au moins un organe détecteur 4 de particules de carbone de type connu également disposé à l'intérieur du coffret du dit appareil.
Le détecteur 2 d'élévation anormale de température à l'intérieur de l'appareil électrique à surveiller permet de déceler, une surchauffe de l'un des composants du dit appareil électrique, tel que notamment un bobinage, un enroulement, etc...

Il permet également de déceler le dégagement de chaleur d'un début d'incendie dûe à la défaillance de l'un quelconque des dits composants de l'appareil électrique.

Le détecteur 3 d'élévation anormale de la luminosité interne au dit appareil électrique permet de déceler toutes défaillances provoquant des flashes lumineux telles que par exemple des court-circuits ou des arcs électriques entre différents composants.

Le dit détecteur permet également de déceler des flammes d'un début d'incendie.

Le détecteur 4 de particules de carbone permet de déceler la calcination d'un composant à base de carbone tel que par exemple d'une résistance, d'une bobine, etc... mais aussi détecte la présence de fumées à l'intérieur de l'appareil. Ces fumées pouvant être par exemple celles d'un incendie naissant.

Selon une forme préférentielle de réalisation, la source électrique 1 est constituée à partir du secondaire 6 d'un transformateur 5 dont le primaire 7 est relié au secteur par tout moyen connu tel que par fiche et socle de prise de courant par exemple.

A l'entrée du primaire du dit transformateur 5 , est connecté de manière connue un circuit 8 reliant le secteur à l'entrée 9 du circuit d'alimentation de l'appareil.

La source électrique 1 du dispositif selon l'invention se compose d'un système redresseur 10 de type connu tel que par exemple au moyen d'une diode ou encore d'un montage en pont de Graëtz appelé plus communément redresseur à double alternance, et d'un condensateur 11 de filtrage monté de manière connue entre la sortie du redresseur 10 et le retour au secondaire du transformateur 5, et/ou d'une cellule de régulation 10A disposée à la sortie du dit système redresseur.

A la sortie du dit système redresseur et/ou du régulateur de tension est connectée une ou plusieurs sondes ou détecteurs 2 d'élévation anormale de la température à l'intérieur du coffret de l'appareil électrique à protéger.

Lorsque plusieurs détecteurs 2 sont employés, chacun des dits détecteurs 2 surveille une des zones les plus critiques de l'appareil, c'est-à-dire essentiellement le générateur de très haute tension (T H T), le transformateur d'alimentation de l'appareil, les selfs de filtrage, les dispositifs de déviation du rayon cathodique disposés sur le col du tube cathodique de l'appareil, etc...

A la sortie des dits détecteurs 2 qui sont comme peut le comprendre tout homme de l'art, disposés en parallèle s'il s'agit de détecteurs munis d'un contact à fermeture ou disposés en série s'il s'agit de détecteurs munis d'un contact à ouverture, se trouve un relais 12 relié au retour du secondaire du transformateur 5.

Le dit relais 12 est doté de préférence d'au moins deux contacts 12 A et 12 B,dont le premier, le contact 12 A, est relié, d'une part à la sortie du redresseur 10 et d'autre part, à au moins un dispositif avertisseur ou alarme, lui même relié au retour du secondaire du transformateur 5.

Le dit dispositif avertisseur est constitué d'une alarme sonore 13 du type sirène ou buzzer et/ ou d'un témoin lumineux 14 clignotant ou non, de type connu tel que par exemple une diode électro-luminescente.

Le deuxième contact 12 B du relais 12 est disposé sur l'un des conducteurs du circuit 8 d'alimentation de l'appareil à protéger.

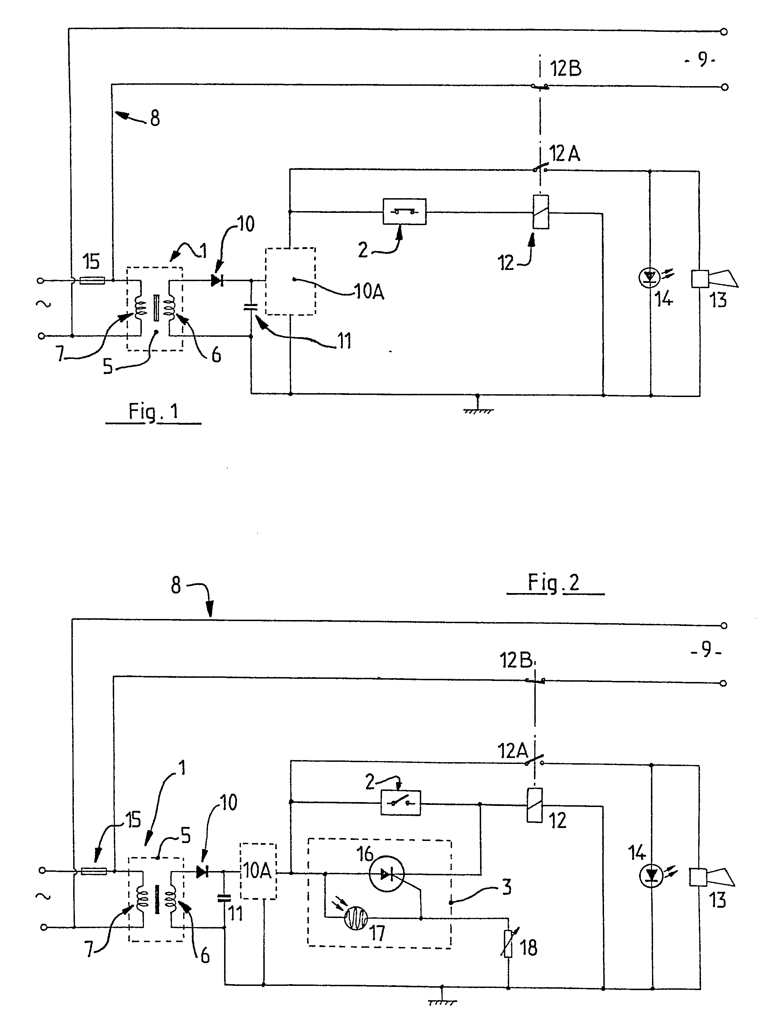

Selon une première forme de réalisation tel que représenté en figure 1, le ou les détecteurs 2 d'élévation anormale de température, est doté d'un contact à ouverture ou d'un système équivalent.

Préférentiellement le dit détecteur 2 d'élévation anormale de température est un interrupteur-capteur de température plus communément appelé détecteur de température à I L S (Interrupteur à lame souple), du type de ceux commercialisés sous le nom de détecteurs de température à"ILS HAMLIN".

L'avantage du dit capteur de température à ILS, est qu'il est fiable, d'une durée de vie longue et en outre d'une précision relativement remarquable puisque durant sa durée de vie, les variations du seuil thermique de commutation ne varient guère plus, de plus ou moins 0,5° C.

Lorsqu'on utilise dans un même dispositif plusieurs des dits détecteurs, en sorte de surveiller différents points critiques, et que le contact interne de chacun des dits détecteurs à l'état de repos est fermé, les dits détecteurs sont branchés en série, comme cela a été décrit ci-avant et les contacts du relais sont à l'état repos, c'est à dire, lorsque aucune tension n'est appliquée aux bornes du primaire du transformateur 5, fermé en ce qui concerne l'état du contact 12A, et ouvert en ce qui concerne le contact 12B.

Lorsque l'appareil électrique doté du dit dispositif de sécurité est relié au secteur de manière connue, tel que représenté en fig. 1, notamment,le primaire du dit transformateur 5 est également alimenté et du fait du contact à ouverture du détecteur 2, le relais 12 est sous tension et les contacts 12A et 12B sont respectivement ouvert en ce qui concerne le contact 12A disposé sur le circuit avertisseur et fermé en ce qui concerne le contact 12B disposé sur le circuit d'alimentation du dit appareil électrique.

L'appareil électrique doté du dit dispositif selon l'invention est en état de fonctionnement et le dit dispositif est en état de surveillance.

Lorsqu'une élévation anormale de température est décelée par l'un quelconque des détecteurs 2, le contact de celui-ci s'ouvre.

Ce dernier coupe ainsi l'alimentation du relais 12, ce qui provoque son retour à l'état de repos.

Les contacts reprennent leur position d'origine,12A se ferme, et 12B s'ouvre, ce qui a pour conséquence d'une part d'alimenter le dispositif avertisseur sonore 13 et/ou visuel 14, et de couper l'alimentation de l'appareil par l'intermédiaire du contact 12B.

L'alimentation du dit appareil ne pourra être rétablie uniquement que lorsque le détecteur 2 ayant provoqué le dite coupure, ne décèlera plus d'échauffement anormal ce qui ne peut être obtenu que

0069182

lorsque l'organe ayant causé le phénomène aura suffisamment refroidi ou même mieux, lorsqu'il aura été changé ou réparé. Le dit changement s'avère de toutes façons necessaire si après plusieurs refroidissements le dispositif selon l'invention continue à signaler une avarie.

Pour des raisons de sécurité évidente à l'homme de l'art, une masse est effectuée entre le retour au secondaire du transformateur 5 et le chassis support du dit dispositif de protection et un fusible 15 est disposé de manière connue sur le circuit d'alimentation du transformateur.5.

Selon une autre forme de réalisation, telle que représentée notamment en fig.2, le détecteur 2 d'élévation anormale de température est doté d'un contact à fermeture. Le dit détecteur 2 est également un capteur de température à ILS, mais son contact à l'état de repos, c'est-à-dire lorsque le seuil de température maximale souhaité n'a pas encore été atteint, est ouvert.

Pour des raisons telles qu'énoncées précédemment, lorsque plusieurs détecteurs 2 sont utilisés, les dits détecteurs 2 sont disposés en parallèle et le relais 12 comporte en position repos au moins un contact ouvert 12A disposé sur le conducteur d'alimentation de l'avertisseur sonore 13 et/ou de l'alimentation de l'avertisseur lumineux 14, et un contact 12B en position fermée disposé sur un des conducteurs du circuit 8 d'alimentation du dit appareil.

A la mise sous tension du transformateur 5, contrairement à la forme de réalisation précédente, aucun changement d'état n'est réalisé au niveau du dit dispositif.

En effet, le relais 12 n'est toujours pas alimenté du fait que le courant ne peut pas passer au travers des détecteurs 2, ce qui permet d'alimenter par contre l'appareil à protéger, par l'intermédiaire du contact 12B qui reste fermé.

Selon cette forme de réalisation durant le bon fonctionnement de l'appareil à protéger, le dit dispositif ne consomme pas d'énergie et est à ce point de vue plus économique que la précédente forme de réalisation, ou durant tout le temps de bon fonctionnement de l'appareil électrique, le dispositif de protection consomme du fait du relais 12 maintenu en excitation, une énergie relativement non négligeable.

Lorsqu'une sonde ou détecteur 2 d'élévation anormale de température décèle un échauffement trop important, le contact du dit détecteur se ferme, ce qui va provoquer l'excitation du relais 12 et par là le changement d'état de tous ses contacts.

Le contact 12 A se ferme et permet l'alimentation de l'avertisseur sonore 13 et/ ou l'alimentation du témoin lumineux 14, tandis que le contact 12 B s'ouvre et coupe ainsi l'alimentation de l'appareil électrique.

Afin que l'utilisateur ne puisse pas rétablir l'alimentation de l'appareil après un laps de temps suffisant pour que l'organe provocateur du dit échauffement détecté, se soit refroidi, et que donc le détecteur 2 ne puisse plus déceler immédiatement l'anomalie, il est avantageux que le relais 12 soit un relais à accrochage dont le désenclenchement ne puisse être effectué que manuellement par un spécialiste.

Dans ce cas, après qu'un échauffement ait été décelé par l'un des détecteurs 2 et après que celui-ci ait provoqué l'enclenchement du relais 12 et donc son accrochage en position enclenchée, celui-ci ne pourra reprendre sa position repos que lorsqu'un spécialiste du dépannage le désenclenchera manuellement après avoir réparé ou changé le composant déficient.

De cette façon, on supprime les conséquences facheuses qui pourraient se réaliser si un utilisateur de l'appareil électrique ainsi protégé, tentait de remettre sous tension le dit appareil quelques temps après que l'échauffement ait été détecté et que le dispositif de protection ait agi, et après que le dit appareil se soit refroidi.

Si un tel cas se produit avec un dispositif de protection comportant un relais 12 à accrochage tel que décrit précédemment, le dit relais garde son état d'enclenchement et donc à chaque tentative de remise sous tension que peut effectuer l'utilisateur, le contact 12 A et le contact 12 B du relais 12 ainsi bloqué réalisent d'une part toujours l'alimentation de l'avertisseur sonore 13 et/ ou du voyant lumineux 14, et d'autre part maintient toujours coupé le circuit 8 d'alimentation dudit appareil.

L'utilisateur n'a à ce moment que l'unique recours de faire appel à un spécialiste pour dépanner le dit appareil, ainsi mis temporairement et volontairement dans l'incapacité de fonctionner.

Selon un perfectionnement aux dispositifs décrits ci-avant, ceux-ci sont dotés d'au moins un détecteur 3 d'élévation anormale de la luminosité interne au coffret du dit appareil électrique. Préférentiellement, le dit détecteur 3 se compose d'un thyristor 16 dont l'anode est relié à la sortie du redresseur 10, et la cathode est reliée à l'entrée du relais 12.

La gachette du dit thyristor 16 est reliée à la sortie d'une cellule photorésistante 17. La dite cellule 17, est elle-même reliée d'une part à la sortie du redresseur 10, tandis que d'autre part elle est connectée à sa sortie à une résistance variable 18 liée au retour du secondaire du transformateur 5 en sorte de permettre le réglage du seuil de luminosité maximale tolérée à l'intérieur du dit appareil et à partir duquel la dite cellule devient conductrice.

Au delà du dit seuil, et alors que la dite cellule 17 est conductrice, la gachette du thyristor 16 est alimentée ce qui permet donc de rendre passant le dit thyristor et donc d'alimenter le relais 12 qui provoque l'enclenchement de l'alarme 13 et/ ou 14 et/ ou la coupure automatique de l'alimentation du dit appareil, comme décrit précédemment.

Il va de soi que le dit détecteur 3 d'élévation anormale de la luminosité interne de l'appareil, branchée en parallèle à au moins un détecteur 2 d'élévation anormale de température conformes à ceux décrits précédemment ne peut contribuer qu'à réduire considérablement les risques d'avaries graves pouvant survenir sur le dit appareil.

Selon un autre perfectionnement du dispositif de protection selon l'invention, celui-ci est doté d'au moins un détecteur 4 de particules de carbone branché dans le dit circuit électrique de la même manière que les détecteurs précédents, c'est-à-dire en parallèle entre eux en sorte qu'il suffise qu'un seul d'entre eux détecte une défaillance de l'appareil pour provoquer aussitôt l'enclenchement du relais 12 et par là la coupure du circuit 8 alimentant le dit appareil et/ ou l'enclenchement d'une alarme sonore et/ ou lumineuse.

Préférentiellement le ou les dits détecteurs 4 de particules de carbone est ou sont branchés en parallèle avec la ou les cellules photorésistantes 17 en sorte de commander lorsque une défaillance d'un composant à base de carbone a été décelée, la conduction du thyristor 16 et donc le système d'alarme et/ ou la coupure automatique de l'alimentation électrique de l'appareil.

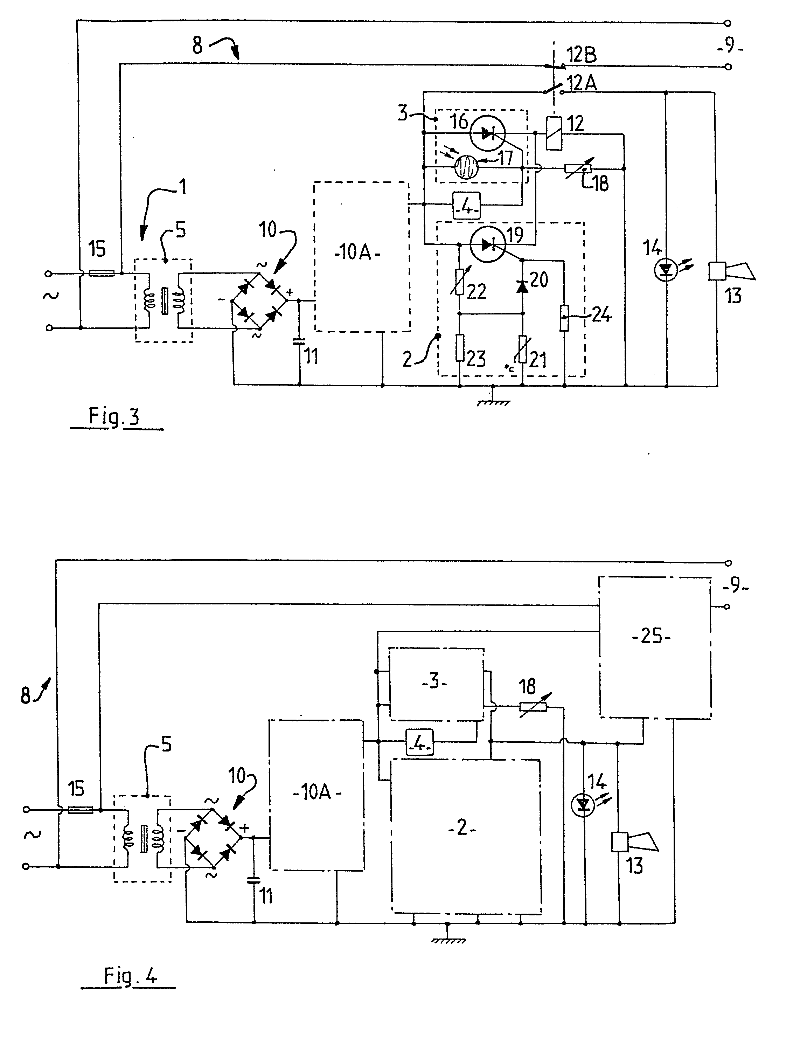

Selon une autre forme de réalisation telle que représentée en figure 3, un détecteur 2 d'élévation anormale de température est une sonde électronique réglable composée de la façon suivante: un thyristor 19 dont l'anode est reliée à la sortie du redresseur 10 et la cathode à l'entrée du relais 12, est relié d'autre part par sa gachette et à travers une diode 20, à une sonde thermique 21 dont la résistance varie en fonction de la température. La dite sonde pouvant être constituée par exemple d'une diode dopée au silicium.

Un talon formé d'une résistance réglable 22 et d'une résistance fixe 23 est disposé de manière connue entre l'anode du thyristor et le retour au secondaire du transformateur 5 et en sorte que leur point de jonction entre elles soit relié au point de jonction entre la sonde 21 et la diode 20, de manière que la variabilité de la résistance 22 puisse permettre le réglage du seuil maximal de température tolérée.

Le dit seuil étant fonction de l'appareil à protéger.

A titre d'exemple, le dit seuil pourra être fixé à 45 ° C, par exemple pour un récepteur de télévision transistorisé et à 60 ° C par exemple pour un récepteur de télévision doté de lampes ou tubes.

Une résistance 24 disposée entre le retour au secondaire du transformateur 5 et la gachette (fig.3) ou la cathode (fig.4) du thyristor 19, permet la polarisation de la gachette du dit thyristor.

0069182

Tout homme de l'art comprendra très bien que lorsque la sonde thermique 21 , qui en cours de fonctionnement a sa résistance qui varie sensiblement linéairement en fonction de la température,va permettre, lorsque le seuil de température maximale réglée sera atteint, et seulement si le dit seuil est atteint, l'excitation de la gachette du thyristor 19 qui deviendra passant et provoquera comme décrit précédemment l'enclenchement des ou de l'alarme et la coupure du circuit d'alimentation de l'appareil électrique ainsi protégé.

Il est à noter que lorsque une telle opération s'est produite, le seul moyen de la stopper et de ramener chaque élément dans son état initial, est de couper l'alimentation du dit dispositif de protection.

En effectuant la réalimentation du dit dispositif, on alimente à nouveau l'appareil électrique à protéger et le dispositif de protection est à nouveau en état de détecter une anomalie de fonctionnement si celle-ci n'était pas passagère et donc de recouper l'alimentation de l'appareil et de redéclencher les alarmes.

Après plusieurs opérations de la sorte, si le dit dispositif de protection ne cesse pas de détecter une anomalie et coupe donc sans cesse l'alimentation de l'appareil électrique, tout en mettant en fonctionnement ses alarmes, c'est que l'avarie interne à l'appareil nécessite alors l'intervention d'un spécialiste du dépannage.

Selon une variante de réalisation telle que représentée en figure 4, le moyen de commutation par relais est remplacé par un système équivalent 25 comprenant principalement un transistor et un triac.

Les dispositifs avertisseurs sont branchés directement à la sortie commune des différents détecteurs, tandis qu'un transistor P N P utilisé en commutation commande la gachette d'un triac qui est lié au circuit d'alimentation de l'appareil, de manière à couper ou non le dit circuit.

0069182

Le fonctionnement du dit dispositif est identique au dispositif précédemment décrit.

Selon une forme de réalisation préférentielle et pour son application particulière aux postes récepteurs de télévision existant, le dit dispositif de protection est conforme en un bloc compact essentiellement constitué d'une plaque de circuit imprimé d'un format relativement réduit et sur laquelle sont disposés sur l'une de ses faces, les différents détecteurs. La dite plaque est fixée dans le coffret du récepteur de télévision préférentiellement dans la partie haute du chassis de celui-ci et en sorte que les différents détecteurs soient orientés vers l'intérieur ou le centre du chassis, en sorte de surveiller convenablement celui-ci.

En effet, comme il est bien connu que la chaleur est ascensionnelle, le détecteur d'élévation anormale de température est ainsi disposé pour le mieux dans un endroit idéal pour déceler un surchauffage.

Il en est de même en ce qui concerne le détecteur de particules de carbone susceptible de déceler la présence de fumée à l'intérieur du dit chassis.

En ce qui concerne le détecteur 3 d'élévation anormale de luminosité interne à l'appareil, comme celui ci est disposé dans la partie la plus haute du dit appareil, et vu le secteur angulaire qu'il peut surveiller, plus celui-ci est éloigné du centre de la partie à surveiller, et plus son champ de surveillance s'élargit.

On voit bien donc que la disposition du dit dispositif protecteur dans la partie haute du chassis du récepteur de télévision est vraiment idéale pour surveiller correctement sensiblement tout l'intérieur du chassis du dit poste récepteur de télévision.

Diverses modifications peuvent être apportées aux différentes formes de réalisation telles que précédemment décrites données à titre d'exemple non limitatifs, sans pourautant sortir du cadre ni de l'esprit de l'invention.

C'est ainsi que par exemple, la source 1 d'alimentation du dit dispositif peut être prise directement sur le transformateur d'entrée du poste recepteur de télévision sans pour cela sortir du cadre du présent brevet.

Il est également possible de réaliser d'autres variantes des formes de réalisation telles que celles notamment représentées aux fig. 2 et 3.

Ces variantes non représentées sont réalisées en utilisant un relais 12 doté d'un seul contact, le contact 12B, toujours disposé sur le circuit 8 d'alimentation de l'appareil électrique, tandis que les dispositifs d'alarme 13 et/ou 14 préalablement alimentés au travers du contact 12A du relais 12 sont selon ces variantes disposés en parallèle avec le relais 12.

De cette manière lorsqu'un détecteur 2,3 ou 4 permet le passage du courant pour alimenter le relais 12 qui aussitôt coupe au moyen de son contact 12B l'alimentation de l'appareil électrique, les dits systèmes d'alarme sont alimentés simultanément avec le dit relais.

Selon une autre variante de réalisation des derniers dispositifs décrits, les détecteurs 2,3, et 4 sont remplacés au moyen d'un seul détecteur susceptible de déceler les mêmes anomalies de fonctionnement que l'ensemble des détecteurs précédents.

Préférentiellement, le dit detecteur est un composant pyroélectrique du type de ceux commercialisés sous le nom de détecteur pyroélectrique I.S.C.

Le dit dispositif protecteur s'applique avantageusement à la surveillance des différents composants internes aux recepteurs de télévision afin d'éviter la destruction complète de ceux-ci, mais son application n'est pas uniquement limité à cela.

Le dit dispositif conforme à l'invention peut en effet être employé avantageusement dans tous les appareils électriques nécessitant une surveillance correcte de leur bon fonctionnement, tel que par exemple les moteurs anti-déflagrants.

REVENDICATIONS :

1. Dispositif de sécurité pour appareils électriques tels que notamment les recepteurs de télévisions pour protéger ceux-ci lors d'une défaillance de l'un de leurs composants en sorte d'éviter la destruction complète du dit appareil caractérisé en ce qu'il est doté d'au moins un détecteur (2) d'élévation anormale de la température interne régnant à l'intérieur du dit appareil et/ou d'au moins un organe détecteur (3) d'élévation anormale de la luminosité interne régnant également à l'intérieur du dit appareil et/ou d'au moins un détecteur (4) de particules de carbone en sorte qu'au moyen de l'un quelconque des dits détecteurs, le dit dispositif est susceptible de déceler une anomalie de fonctionnement ou une défaillance même temporaire de .l'un quelconque des composants de l'appareil électrique, tel que par exemple le claquage d'un composant, le surchauffage d'un bobinage, la production d'arcs électriques, etc... de manière à couper l'alimentation du dit appareil et/ou de déclencher un quelconque système d'alarme.

2. Dispositif de sécurité pour appareils électriques selon la revendication 1, caractérisé en ce que le détecteur (2) d'élévation anormale de température est un capteur de température à ILS (Interrupteur à Lame Souple), en sorte que le dit dispositif soit fiable, précis en ce qui concerne son seuil de température de déclenchement et d'une longueur durée de vie.

3. Dispositif de sécurité pour appareils électriques selon la revendication 1 caractérisé en ce que le détecteur (3) d'élévation anormale de la luminosité interne au dit appareil comporte une photorésistance ou cellule photorésistante (17).

4. Dispositif de sécurité pour appareils électriques selon les revendications 1 et 3 caractérisé en ce que la dite cellule photorésistante (17) est reliée à la gachette d'un thyrsistor (16) en sorte qu'une simple étincelle déclenche le dit thyrsistor et permette l'alimentation permanente du ou des dispositifs avertisseurs ainsi que la coupure permanente de l'alimentation au dit appareil jusqu'à une coupure de l'alimentation du dit dispositif.

5. Dispositif de sécurité pour appareils électriques selon les revendications 1,3,et 4, caractérisé en ce qu'une résistance variable (18) est disposée entre la gachette du dit thyristor (16) et le retour à la source d'alimentation (1) en sorte de permettre le réglage du seuil de luminosité maximale tolérée dans le dit appareil.

6. Dispositif de sécurité pour appareils électriques selon les revendications 1,3 et 4 caractérisé en ce que le détecteur (4) de particules de carbone est disposé en parallèle avec la cellule photorésistante (17) en sorte de commander le passage du thyristor (16) en permanence lors de la détection de quelques particules de carbone ou lors de la détection d'un flash lumineux à l'intérieur du dit appareil.

7. Dispositif de sécurité pour appareils électriques selon la revendication 1, caractérisé en ce que le détecteur (2) d'élévation anormale de température est une sonde électronique à seuil de déclenchement réglable et comportant notamment une sonde thermique (21) du type diode dopée au silicium.

8. Dispositif de sécurité pour appareils électriques selon les revendications 1 et 7 caractérisé en ce que la dite sonde thermique (21) est liée à la gachette d'un thyristor (19) en sorte que le moindre dépassement du seuil maximal de température tolérée rende passant le dit thyristor et alimente ainsi en permanence le ou les systèmes d'alarme et le moyen de coupure de l'alimentation électrique du dit appareil.

9. Dispositif de sécurité pour appareils électriques selon la revendication 1 caractérisé en ce que le détecteur (2) d'élévation anormale de la température, le détecteur (3) d'élévation anormale de la luminosité, et le détecteur (4) de particules de carbone sont confondus en un seul et même composant.

10. Dispositif de sécurité pour appareils électriques selon la revendication précédente, caractérisé en ce que le dit composant est préférentiellement un détecteur pyroélectrique du type détecteur pyroélectrique I.S.C.

11. Dispositif de sécurité pour appareils électrique selon la revendication 1 caractérisé en ce qu'il est conformé en un appareil monobloc de taille réduite en sorte de s'appliquer aisément à l'intérieur de tous les appareils électriques existants dont notamment les postes recepteurs de télévision.

Fig. 1

Fig. 2

0069182

Fig. 3

Fig. 4

**0069182**

Numéro de la demande

Office européen
des brevets

**RAPPORT DE RECHERCHE EUROPEENNE**

EP 81 40 1066.6

| Catégorie | Citation du document avec indication, en cas de besoin, des parties pertinentes | Revendication concernée | CLASSEMENT DE LA DEMANDE (Int. Cl. 3) |
|---|---|---|---|
| X | FR - A1 - 2 471 665 (G. GAVARRET) <br> * page 1, ligne 18 à page 3, ligne 26; fig. 1 à 4 * <br> -- | 1-3 | H 02 H 1/00 <br><br> H 02 H 3/04 <br><br> H 02 H 5/04 <br><br> H 04 N 3/20 |
| Y,A | DE - A - 2 247 114 (SIEMENS AG) <br> * revendications 1, 3, 4 * <br> -- | 1,10 | |
| Y | DE - A - 2 216 238 (BROWN, BOVERI & CIE AG) <br> * page 1, lignes 20 à 25 * <br> -- | 1,3,4 | |

**DOCUMENTS CONSIDERES COMME PERTINENTS**

**DOMAINES TECHNIQUES RECHERCHES (Int. Cl. 3)**

| Catégorie | Citation du document avec indication, en cas de besoin, des parties pertinentes | Revendication concernée | |
|---|---|---|---|
| Y | FR - A1 - 2 262 896 (S.C.I.T.) <br> * page 4, lignes 16 à 33; fig. 3 * <br> -- | 4 | H 02 H 1/00 <br><br> H 02 H 3/04 <br><br> H 02 H 5/00 <br><br> H 02 H 5/04 <br><br> H 02 H 5/08 |
| A | FR - A - 2 207 313 (TEXAS INSTRUMENTS) <br> * fig. 1 à 4 * <br> -- | 8 | |
| A | US - A - 3 833 835 (E.R. PLASKO) <br> * colonne 1, lignes 3 à 6, 20 à 40 * <br> -- | | |
| D,A | FR - A - 1 221 005 (WESTINGHOUSE ELECTRIC CORP.) <br> * fig. 3, 4 * <br> ---- | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le present rapport de recherche a eté établi pour toutes les revendications

| Lieu de la recherche | Date d'achèvement de la recherche | Examinateur |
|---|---|---|
| Berlin | 15-02-1982 | LEMMERICH |

OEB Form 1503.1  06.78